(19) Europäisches Patentamt
European Patent Office
Office européen des brevets

(11) **EP 1 270 650 B1**

(12) **EUROPEAN PATENT SPECIFICATION**

(45) Date of publication and mention
of the grant of the patent:
**12.05.2010 Bulletin 2010/19**

(21) Application number: **00977961.2**

(22) Date of filing: **27.11.2000**

(51) Int Cl.:
*C08J 5/18* (2006.01)     *B32B 27/36* (2006.01)
*B32B 27/10* (2006.01)     *B65D 5/52* (2006.01)
*C08L 67/00* (2006.01)

(86) International application number:
**PCT/JP2000/008349**

(87) International publication number:
**WO 2001/051545 (19.07.2001 Gazette 2001/29)**

(54) **BIODEGRADABLE FILM AND BOX HAVING WINDOW WITH FILM**

BIOABBAUBARE FOLIE UND DOSE MIT AUS DIESER FOLIE GEFORMTEM FENSTER

FILM BIODEGRADABLE ET BOITE A FENETRE AVEC FILM

(84) Designated Contracting States:
**BE DE FR GB IT NL SE**

(30) Priority: **12.01.2000 JP 2000003726**

(43) Date of publication of application:
**02.01.2003 Bulletin 2003/01**

(73) Proprietor: **MITSUBISHI PLASTICS, INC.**
**Chiyoda-ku,**
**Tokyo 100-0005 (JP)**

(72) Inventors:
• **TERADA, Shigenori,**
  **Nagahama Plant**
  **Nagahama-shi,**
  **Shiga 526-8660 (JP)**
• **TAKAGI, Jun,**
  **Mitsubishi Plastics, Inc.**
  **Tokyo 100-0005 (JP)**
• **YOSHIGA, Norio,**
  **Nagahama Plant**
  **Nagahama-shi,**
  **Shiga 526-8660 (JP)**

(74) Representative: **Grünecker, Kinkeldey,**
  **Stockmair & Schwanhäusser**
  **Anwaltssozietät**
  **Leopoldstrasse 4**
  **80802 München (DE)**

(56) References cited:
EP-A2- 0 683 207     WO-A1-96/31303
JP-A- 4 334 448      JP-A- 7 205 278
JP-A- 8 073 628      JP-A- 8 252 895
JP-A- 10 147 653     JP-A- 11 042 752
JP-A- 2000 044 702   US-A- 5 760 118

## Description

Technical Field

This invention relates to a biodegradable film which is improved in heat resistance and embossing workability, and a window-pasted box formed of a stretched biodegradable film.

Background art

In order that merchandise in a box can be seen, many packaging boxes having windows are used. With packaging boxes simply formed with through windows, merchandise therein can be polluted or come out of the box through the window, though depending on the shape of the merchandize. Thus, window-pasted boxes are used in which plastic film of e.g. polypropylene or other material having transparency is stuck at the window.

Paper as a substrate of such a packaging box basically has a problem that water resistance, resistance to oil and grease, tear strength, etc. are not sufficient. Generally, in order to solve these problems, a plastic material is pasted to the entire paper box with a window. There are few cases in which only the window of a box and its surroundings are covered with a plastic material.

As the plastic material, polypropylene is general. While polypropylene film is superior in heat resistance (resistance to heat deformation) in a hot environment such as when left in an automobile in summer, it has a disadvantage that it is not suited to embossing in which patterns, logo marks, product names, company names, etc. are embossed with high accuracy.

Also, because window-pasted boxes made of polypropylene film and paper are not suited for automatic carton making machines (in which folded boxes will not stand), they have been assembled by folding manually. Further, in manufacturing window-pasted boxes using such a plastic material, when the window portion was observed after it had been stuck on paper, corrugations, bagginess and wrinkles were found, so that the finish was far from good. Further, since the plastic material remains in natural environment without decomposing, composite window-pasted boxes had a problem that they have no natural decomposability.

On the other hand, as plastic materials, biodegradable plastics, which decompose if left in the natural environment, are gathering attention in recent years in view of natural environment protection. As one of them, polylactic acid-family plastic materials are known.

As ones in which polylactic acid-family material and paper are composited, there are known ones in which a substrate containing vegetable fiber is covered with polylatic acid or its derivative (JP patent publication 4-334448), degradable laminate paper comprising a paper and a thermoplastic degradable polymer of which the major component is a copolymer of polylactic acid or lactic acid and oxycarboxylic acid (JP patent publication 4-336246), etc. Also, there is known one in which the above-described biodegradable film, which is an orientated polylactic acid-family film, is laminated with paper (JP patent publication 8-252895).

Disclosure of the Invention

But since films disclosed in JP patent publications 4-334448 and 4-336246 are brittle, the portions where they are stuck on windows are liable to break.

Also, while the film described in JP patent publication 8-252895 is improved in brittleness and shows good laminating properties with paper, it was poor in heat resistance (to deform in a high-temperature environment of about 60 ˚C in summer) and embossing workability for improving designability.

An object of the present invention is to provide a method of manufacturing a window-pasted box comprising the steps of forming a window (1) of such a size and shape that the content of the box can be seen therethrough in neighboring two, three or four sides in a substrate of a packaging box made of paper; laminating a biodegradable stretched film (2) on the exterior surface to cover the window, said stretched film comprising a polylactic acid-family polymer being a polymer of which the major component is L-, D- or DL-lactic acid units, said film having a shrinkage rate at 80˚C/10 min of from 0.5 to 5%, a haze of 10% or less, and an average surface roughness Ra of from 0.01 to 0.08, said film having been heat-treated while gripping it; and assembling the film-laminated substrate (3).

The film (2) is superior in heat resistance in hot environments and in embossing workability for improving design properties, and has degradability in natural environments. Another object is to provide a biodegradable film having such properties and applicable as a film laminated to packaging boxes.

Another object is to provide a window-pasted box good in aptitude for automatic carton forming machines, free from bagginess, wrinkles, corrugations, etc. at portions where a film is pasted to windows, good in finish, and having degradability in natural environments.

The inventors of the present invention have completed the inventions claimed herein as a result of ardent studies in an attempt to solve these problems. According to the present invention, there is provided a biodegradable film comprising a polylactic acid-family polymer, and having a shrinkage rate at 100 ˚C/5 minutes of 3% or less and a dead-foldability of 70 degrees or over.

Also, this biodegradable film is preferably a monoaxially stretched film stretched by 1.5 to 6 times in one direction at a stretching temperature of 70-90 ˚C, and heat-treated in a stretched state at a temperature of 110 ˚C to (Tm - 10) ˚C (Tm is the melting point of a polylactic acid-family polymer).

Further, the above biodegradable film is preferably a biaxially stretched film stretched by 1.5 to 6 times in a machine direction at a stretching temperature of 70 to 90 ˚C, stretched by 1.5 to 6 times in a transverse direction at a stretching temperature of 70 to 80 ˚C, and heat-treated in a stretched state at a temperature of 110 ˚C to (Tm to 10) ˚C (Tm is the melting point of a polylactic acid-family polymer.).

The biodegradable film of this invention satisfies the abovesaid requirements, and it provides a biodegradable film used as a laminate film for packaging boxes, which is superior in heat resistance, which in use at high-temperature in summer, hardly develops wrinkles at the portions where laminated with paper, which is also superior in precision embossing workability for designability, and which has degradability in natural environments.

Also, the present invention provides a window-pasted box comprising a laminate formed of a stretched film (A) and paper (B), the stretched film comprising a polylactic acid-family polymer and having a shrinkage rate at 80 ˚C/10 min of 0.5 to 5%, and a haze of 10% or less, and having a window through which the inside of the box can be seen.

Preferable embodiments of the present invention include a window-pasted box in which the average surface roughness Ra of the stretched film (A) is not less than 0.01 and not more than 0.08, a window-pasted box in which at least one of the sides of the stretched film (A) is corona-treated, a window-pasted box in which both sides of the stretched film (A) are corona-treated, a window-pasted box in which the surface wetting index of the stretched film (A) is 40 to 55 dyn/cm, and a window-pasted box in which the stretched film (A) and paper (B) are laminated at 60 to 80 ˚C.

Brief Description of the Drawings

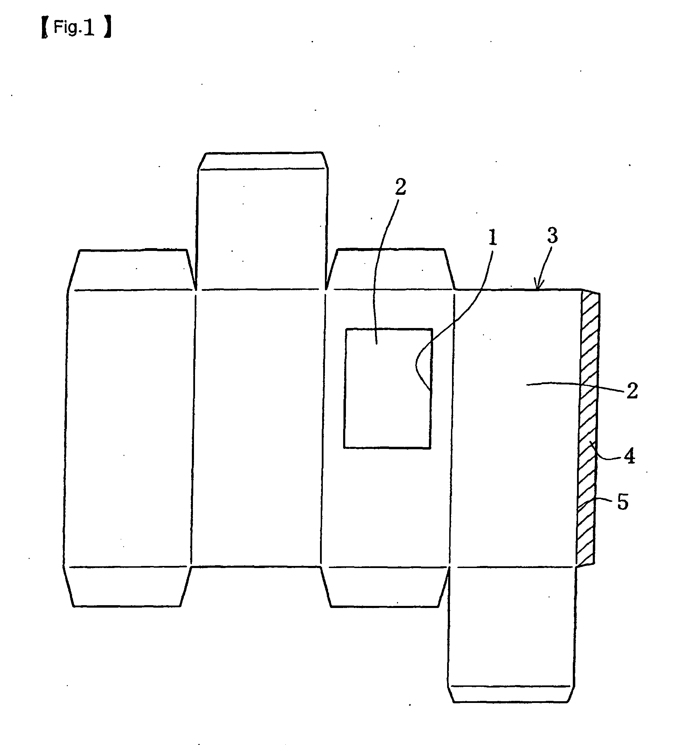

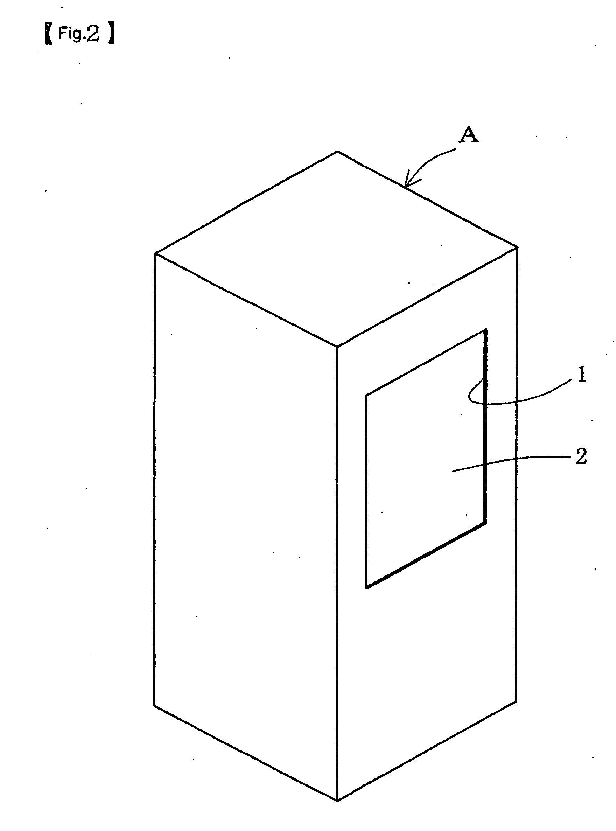

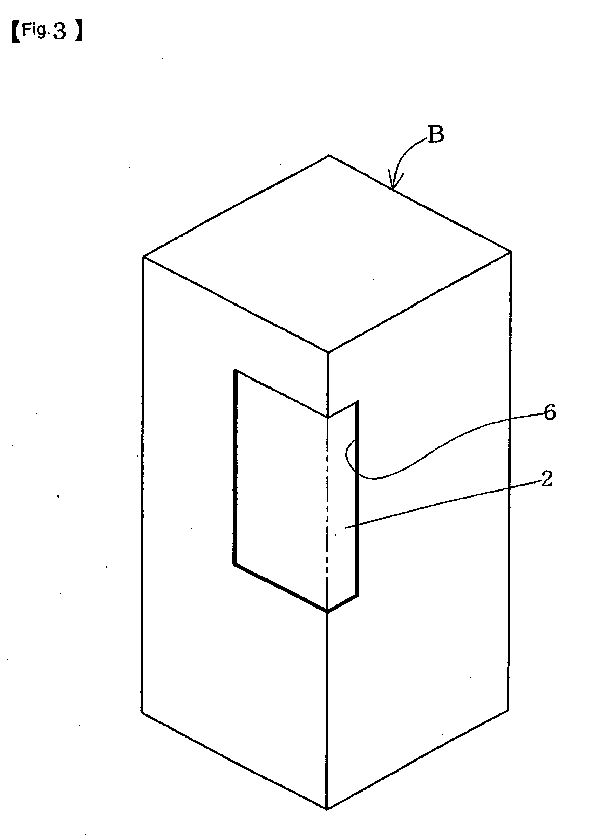

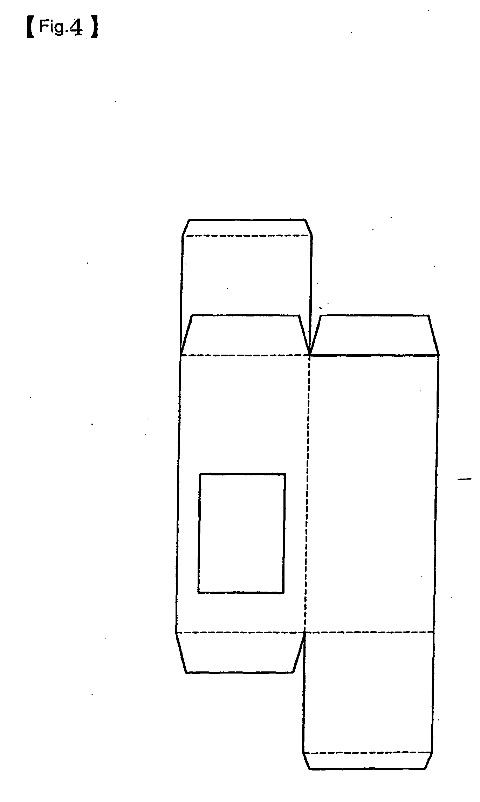

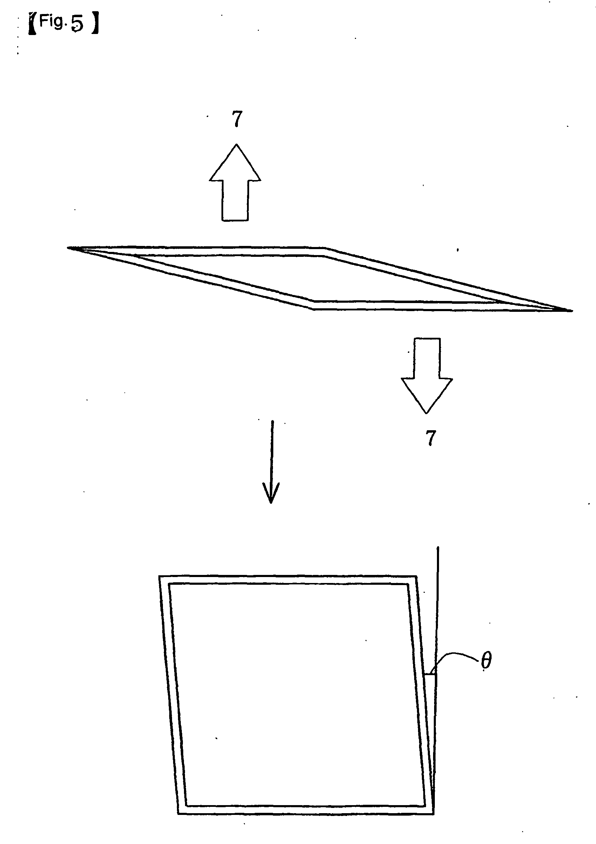

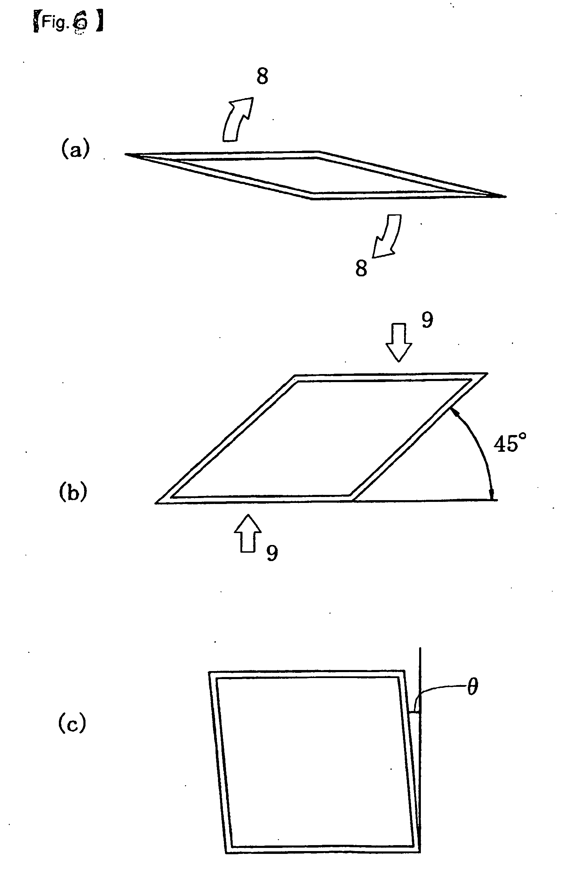

Fig. 1 is a developed view of a window-pasted box showing how the biodegradable film is used, Fig. 2 is a perspective view of the window-pasted box showing how the biodegradable film is used, Fig. 3 is a perspective view of another embodiment of the window-pasted box, Fig. 4 is a view showing how the substrate is punched as shown in Fig. 1 and stuck together by applying an adhesive to an adhesive margin, Fig. 5 is a view showing how the double-folded one of Fig. 4 is sucked at top and bottom to erect it and the contents is filled, and Fig. 6 is a view showing a method of determining the automatic box making aptitude.

Best Mode for Carrying Out the Invention

Embodiments of the invention defined in the claims of the present application will be described in detail.

The polylactic acid-family polymer of the biodegradable film material used in the present invention is a polymer of which the major component is L-, D- or DL-lactic acid units. It may contain other hydroxycarboxylic acid units as small amounts of copolymeric components, and also may contain a small amount of chain extender residual groups.

As the polymerizing method, any known method such as condensation polymerization or ring opening polymerization may be used. For example, with the condensation polymerization, it is possible to obtain a polylactic acid polymer having any desired composition by directly subjecting L-lactic acid, D-lactic acid or mixture thereof to dehydration condensation polymerization.

In the ring opening polymerization (lactide method), by polymerizing a lactide, which is a cyclic dimer of a lactic acid, a polylactic acid polymer can be obtained using a selected catalyst and a polymerization adjusting agent or the like as necessary.

The weight-average molecular weight of the polylactic acid-family polymer used in the present invention is preferably 60000 to 700000, more preferably 80000 to 400000, particularly preferably 100000 to 300000. If the molecular weight is too small, practical physical properties such as mechanical properties and heat resistance would hardly reveal. If too large, the melt viscosity would be too high, so that molding workability would be inferior.

As monomers to be copolymerized into the polylactic acid polymer, optical isomers of lactic acids (D-lactic acid for L-lactic acid and L-lactic acid for D-lactic acid), 2-functional aliphatic hydroxy caroxylic acids such as glycolic acid, 3-hydroxy butyric acid, 4-hydroxy butyric acid, 2-hydroxy-n-butyric acid, 2-hydroxy-3,3-dimethylbutyric acid, 2-hydroxy-3-methylbutyric acid, 2-methyllactic acid and 2-hydroxycaproic acid, and lacones such as caprolactone, butyrolactone and valerolactone can be cited.

For the purpose of adjusting various physical properties, heat stabilizers, light stabilizers, light absorbers, lubricants, plasticizers, inorganic fillers, colorants, pigments, etc. may be added.

The film according to this invention should preferably be stretched to achieve required strength. Among stretched films, there are monoaxially stretched films and biaxially stretched films. In view of physical properties, the latter are preferable.

For the manufacture of monoaxially stretched film, there are two methods, one is stretching in the machine direction only by the roll method using a plurality of rolls having different peripheral speeds, and the other is stretching in the transverse direction only by the tenter method.

For the manufacture of biaxially stretched film, there are a successive biaxially stretching method in which machine direction stretching is carried out by the roll method and transverse direction stretching is carried out by the tenter method, and a simultaneous biaxially stretching method in which the film is stretched in a machine direction and in a transverse direction at the same time with a tenter.

Stretching conditions may be selected in ranges of 1.5 to 6 times, preferably 2 to 4.5 times in the machine direction and 1.5 to 6 times, preferably 2 to 4.5 times in the transverse direction. In particular, in view of the film strength and the thickness accuracy, in the monoaxial stretching, it is preferably 3 times or over and 2 times or over in both directions in the biaxial stretching. Further, the area stretching ratio obtained by multiplying the machine direction and transverse direction stretching ratios is preferably 6.5 times or over.

In the monoaxial stretching method, the stretching temperature is preferably 70-90 ˚C, and in the successive biaxial stretching, the machine direction stretching temperature is preferably 70-90 ˚C and the transverse direction stretching temperature is preferably 70-80 ˚C. In the simultaneous biaxial stretching, because it is included in the successive biaxial stretching, stretching is preferably carried out at the stretching temperature of 70-80 ˚C. If the stretching magnification and stretching temperature are not in the above ranges, the evenness of thickness of the film obtained tends to be extremely low. This tendency is particularly remarkable with films that are heat-treated after stretching. Such an unevenness in thickness may cause wrinkles or corrugations remarkably in end products during the secondary working such as lamination with paper.

In the present invention, it is important to control the film shrinkage factor of the film. The shrinkage factor at 100 ˚C/5 minutes is preferably 3% or under. If it is over 3%, trouble may occur in use environments. In particular, if it is used outdoors as covers for packaging boxes, they may be put in trunk rooms or glove compartments of cars or the like. In such environments, the temperature sometimes rises to a high temperature in summer. If the shrinkage factor of the film is higher than the predetermined value, the film at the window-pasted portion, particularly at a portion that bridges two or more sides may shrink and be deformed.

In order to suppress heat shrinkage of the film, it should be heat-treated while being tensioned. Normally, in the roll method, the film is heat-treated after stretching by bringing it into contact with a heating roll. In the tenter method, the film is heat-treated while it is being stretched with the film gripped with a clip.

The heat treatment temperature is, though depending upon the melting point of the polylactic acid-family polymer used, from 110 ˚C to (melting point - 10 ˚C), and the film is preferably heat-treated for 3 seconds or longer. If the temperature range or heat treatment time is below the above ranges, the heat shrinkage factor of the film obtained will be high, so that trouble may occur in the above-described use environments.

The melting point (Tm) of the polylactic acid-family polymer can be measured by use of DSC-7 made by Perkin Elmer under JIS K 7121 and JIS K 7122. After test pieces (10 mg) formed from an unstretched film have been conditioned in a standard condition, endothermic peaks are read from DSC curves drawn while the temperature is raised to 200 ˚C at the rate of 10 ˚C/minute with the nitrogen gas flow rate of 25 ml/minute. The melting point is indicated in Tm.

For example, a polylactic acid in which the ratio between the L-lactic acid unit and the D-lactic acid unit is 98:2 has a melting point of 158 ˚C whereas a polylactic acid in which the ratio is 95:5 has a melting point of 148 ˚C.

In order to further suppress the shrinkage factor, transverse relaxation is effective in which heat treatment is carried out while slightly shrinking the film in a monoaxial direction or biaxial direction under the above conditions.

The film according to the present invention should have a dead-foldability as measured by the below-described method of 70 degrees or over.

Films having the dead-foldability of less than 70 degrees are bad in embossing workability. Namely, no sharp corners may be formed at embossed portions in embossing in which patterns, logo marks, trade names, company names, etc. are embossed.

The film may be laminated by any known method such as dry-laminating, wet-laminating, hot-melt-laminating on paper such as kraft paper, printing paper, imitation Japanese vellum or cardboard. In many cases, embossing is carried out in this state.

As adhesives or stickers (hereinafter referred to as adhesives) used for lamination, vinyl-family, acrylic-family, polyamide-family, rubber-family and urethane-family, or biodegradable adhesives may be used. Though the amount of the adhesive used is small, it is preferable that it is biodegradable. As biodegradable adhesives, carbohydrates such as starch, proteins such as glue, gelatin and casein, and unvulcanized natural rubber may be used.

As for the layer structure of the laminate material using the film, two-layer structure formed of the film of this invention/paper, or three-layer structure formed of the film of this invention/paper/film of this invention may be used, but it is not particularly limited.

The film of this invention should preferably be corona-treated before composited with paper. By carrying out corona treatment, it is possible to improve wettability of the film surface and thus to improve the bond strength after it is laminated on paper with an adhesive. The film not corona-treated will peel off paper with a slight force. Corona treatment may be carried out with a conventionally used known device. The surface of the film to be corona-treated is the surface to be laminated to paper.

The window-pasted box to which the film of this invention is used is manufactured by forming a window 1 of such a size and shape that the content (merchandize) can be seen therethrough, as shown in Fig. 1, in a substrate of a packaging box made of paper, laminating a biodegradable film 2 thereon (on the exterior surface) to cover the window, and assembling the film-laminated substrate 3.

The film-laminated substrate 3, which is a laminate consisting of the laminated film and paper (substrate), is blanked as shown in the development view of Fig. 1, and then assembled into a rectangular box (packaging box) A shown in Fig. 2 manually or by means of an automatic box making machine.

If an automatic box making machine is used, an adhesive is applied to an adhesive margin 4 of the film-laminated substrate in the development view of Fig. 1, the substrate is bent along the fold line 5 and the ends of the substrate are pasted. The box formed is erected by sucking its top and bottom and is filled with a content (merchandize).

The size and number of windows 1 are not particularly limited. The window may be formed in one side of the box as shown in Fig. 2, or in neighboring two sides as in the box B of the embodiment shown in Fig. 3. While not shown, the windows may be formed in three or four sides.

The subject matters of the biodegradable film of the present invention are listed below:

(1) A biodegradable film for a packaging box with a see-through window, the biodegradable film comprising a polylactic acid-family polymer and having a shrinkage rate at 100 °C/5 minutes of 3% or less and a dead-foldability of 70 degrees or over.

(2) A biodegradable film for a packaging box with a see-through window as described in item (1), the film being a monoaxially stretched film stretched by 1.5 to 6 times in one direction at a stretching temperature of 70 to 90 °C, and heat-treated in a stretched state for 3 seconds or over at a temperature of 110 °C to (Tm - 10) °C, wherein Tm is the melting point of the polylactic acid-family polymer.

(3) A biodegradable film for a packaging box with a see-through window as described in item (1), the film being a biaxially stretched film stretched by 1.5 to 6 times in a machine direction at a stretching temperature of 70 to 90 °C, stretched by 1.5 to 6 times in a transverse direction at a stretching temperature of 70 to 80 °C, and heat-treated in a stretched state for 3 seconds or over at a temperature of 110 °C to (Tm - 10) °C, wherein Tm is the melting point of the polylactic acid-family polymer.

The window-pasted box according to the present invention is a paper box for packaging merchandize, formed as shown in Figs. 1, 2 and 3, by forming a window so that the content can be seen therethrough, and laminating a film to cover the window. The size and number of the windows are not particularly limited, and the window may be formed in one side of the box or in neighboring two, three or four sides.

In the present invention, it is important to control the shrinkage factor of the film. The shrinkage factor at 80 °C/10 minutes is preferably 0.5 to 5%. If it is too low, after laminated to paper formed with a window, bagginess, corrugations or wrinkles may be formed on the film. Thus finish would not be beautiful. If it is too high, due to the heat applied during lamination, the film would markedly shrink, thus developing wrinkles. This also causes a problem that the laminate with paper may curl. If the shrinkage factor is in the above range, the film will slightly shrink during lamination, so that a window-pasted box having a good finish and free from bagginess, corrugations or wrinkles is obtained. More preferably, the shrinkage factor is 1 to 3% at 80 °C/10 min.

In the lamination of the film on paper, for suppression of statics during the manufacturing steps and wrinkle-free finish, it is important to maintain a good slip. In order to improve the slip of the film, it is the simplest way to apply a waxy substance to the film surface.

But since this lowers the bond strength between the film and paper, it is not a preferable method. A second method is to mix inert inorganic particles in the polylactic acid-family polymer and cause them to protrude from the film surface during the stretching step, thereby roughen the surface. With this method, the contact area between the films or between film and paper reduces, so that slip improves. The roughness can be measured by the method described in JIS B0601. Specifically, the average roughness Ra should be not less than 0.01 and not more than 0.08. If the average roughness Ra is too small, the film surface is practically not roughened, so that the friction coefficient will increase and the slip property is low. If the average roughness Ra is too large, scattering of light at the film surface would be severe, so that transparency lowers. As for transparency, the object of the present invention is to provide a window-pasted box of which the content can be seen through the window. The haze should be 10% or under, preferably 5% or under. With a film having the haze of 10% or over, while it is possible to see the content therethrough, cloudy feeling would remain and the film lacks clearness.

In order to suppress heat shrinkage of the film, it is necessary to heat-treat the film while gripping it. Normally, in the roll method, the film is heat-treated after stretching by bringing it into contact with a heating roll. In the tenter method, since the film is stretched gripped with a clip, it is heat-treated immediately. As for the heat treatment temperature, though depending upon the melting point of the polylactic acid-family polymer used, the film is heat-treated between 110 ˚C and (melting point - 10) ˚C for three minutes. If it is below this range, the heat shrinkage factor of the film obtained would be high, so that the film may shrink during working in the aforementioned film laminating step. If the heat treatment temperature is over (melting point - 10) ˚C, the surface of the film will be roughened markedly during heat treatment, which will cause whitening and impair transparency. Further, if it is over the melting point, the film would melt and break.

For the purpose of forming clear corners of the box, the stretched film (A) used in the present invention preferably has a modulus of elasticity of 200-500 kgf/m$^2$, more preferably 250-450 kgf/mm$^2$. Forming clear corners of the box means folding the film at right angle where the window extends over two sides of the box when the laminate with paper is folded into the shape of a box as shown in Fig. 3. It means cleanly folding into a line. With a soft film, no angling is possible. Instead, bagginess or corrugations develop at this portion. This is related to the self-supportiveness of the film.

The stretched film (A) used in the present invention is preferably corona-treated before compositing with paper. By carrying out corona treatment, it is possible to improve wettability of the film surface and thus to improve the bond strength after the film is laminated to paper with an adhesive. A film not corona treated will peel off the paper with a slight force. Corona treatment can be done with a conventionally known device. The surface to be corona-treated is the surface to be laminated with paper. The laminate formed by laminating the film with paper is blanked into a shape as shown in the development view of Fig. 1, and formed into a box. An adhesive is applied to or dripped onto an adhesive margin as shown in Fig. 1. By enclosing the laminate as shown in the development view, the adhesive margin is coupled to the inside of the paper. This adhesive margin is on a surface opposite the surface of the film on which is laminated paper. Thus, since an adhesive is applied to the film, even when it is laminated, if external force is applied with the merchandize put in the box, due to a shock resulting from an inadvertant fall, peeling may easily occur at the interface between the film and the adhesive. Thus, if higher bond strength is desired, wettability on this surface is preferably improved. Thus the film is preferably corona-treated.

In view of the bond properties, the stretched film (A) used in the present invention has preferably a surface wetting index of 40 to 55 dyn/cm, more preferably 45 to 55 dyn/cm.

The paper (B) used in the present invention is not particularly limited. For example, kraft paper, printing paper, imitation Japanese vellum, cardboard, etc. may be used.

The stretched film (A) according to the present invention can be laminated on paper (B) with a known method such as dry laminating, wet laminating or hot-melt laminating. As mentioned above, in order to improve the beauty of the window-pasted portion, it is preferable to laminate at a temperature of 60-80 ˚C. If the temperature for lamination is too low, no shrinkage of film is obtained. If it is too high, the shrinkage factor would be too high.

The stretched film (A) may be laminated on paper (B) with an adhesive or a sticking agent.

As adhesives or stickers used, vinyl-family, acrylic-family, polyamide-family, rubber-family, urethane-family ones, and biodegradable ones may be used.
Although the adhesive or sticker used is extremely small in amount compared with the entire window-pasted box, they are also preferably biodegradable. As biodegradable ones, carbohydrates such as starch, proteins such as glue, gelatin and casein, and unvulcanized natural rubber, etc. may be used.

As for the layer structure of the laminate material using the film, two-layer structure consisting of film of this invention/paper, or three-layer structure consisting of film of this invention/paper/film of this invention may be used, but it is not particularly limited.

The laminate comprising the laminated film and paper is blanked as shown in the development view of Fig. 1, and then is made into a box manually or by an automatic box making machine. In using an automatic box making machine, from the developed state as shown in Fig. 1, an adhesive is applied to the glue margin and both ends are stuck together, and after folding it in half as in Fig. 4, it is erected by sucking its top and bottom as shown in Fig. 5 and filled with a content. But the automatic box making aptitude varies according to the way it stands. The nearer the angle θ shown in Fig. 5 is to 0˚, the better. The angle should be 20˚ or under, preferably 10˚ or under for applicability on an automatic box making machine.

Examples

Examples will be shown below. Measurements and evaluations shown in Examples were carried out under the following conditions.

(1) Heat shrinkage rate

Film samples were cut out to 140 mm (width 10 mm) in the machine direction (MD) and transverse direction (TD), and gauge marks were formed in the transverse direction at intervals of 100 mm in the machine direction. After they have been immersed in a hot water bath of 100 ˚C for 5 minutes, dimensions between the gauge marks were measured and the heat shrinkage rate was calculated by use of the following formula:

```
Heat shrinkage rate (%) = {(dimension before

shrinkage - dimension after shrinkage)/(dimension before

shrinkage)} x 100
```

(2) Dead-foldability

Film samples were cut out to 20 mm wide x 150 mm long. With one machine direction end held, the portion 30 mm away from the other end was folded by 180˚. After a load of 0.15 MPa was applied for 0.5 second, the load was removed instantly. Then, after returning the unheld end to the original position by hand, the hand was released. The angle of the film end from the original position was measured by a protractor as the dead-foldability. The larger the angle value, the better the dead-foldability.
(max: 180 ˚ , minimum: 0˚)

(3) Heat resistance in use environments

A box to which was pasted a window covering on two sides as shown in Fig. 3 was stored in a hot air drying machine at 60 ˚C for one week, and the window-pasted portion was visually observed for the deformed state. △ and ○ were evaluated as passable.

○: No abnormality
△ : Folded portions are slightly loose
✕ : Deformation found

(4) Embossing workability

After a company name (Mitsubishi Plastics Inc.) 35 points in size and 2 mm deep was embossed with a press at room temperature, the embossed portion, especially at the corner portions, was observed visually for finish. △ and ○ were evaluated as passable.

○: Shape is retained cleanly even at the corner portions
△: Finish is slightly loose
✕: Finish is significantly loose and shape is not retained

(5) Melting point

Using DSC-7 made by Perkin Elmer, the melting point was measured under JIS-K7121. Test pieces weighing 10 mg of the film were subjected to conditioning in the standard state. From the DSC curves drawn while the temperature was raised to 200 ˚C at the rate of 10 ˚C /minute with the nitrogen gas flow rate at 25 ml/minute, an endothermic peak was read and the temperature at that time was determined as the melting point.

(6) Haze

Measurement was made under JIS K7105. The smaller the haze value, the higher the transparency.

(7) Surface roughness

Measurement was made with the method described in JIS B0601. Using the surface roughness measuring device (SE-3F) made by Kosaka Laboratory Ltd., the centerline average roughness Ra and the ten-point average roughness (Rz) were determined. The radius of tip of the probe of the measuring device was 2 $\mu$m, the load was 30 mg, the measuring length was 8 mm, and the cut-off value was 0.08 mm.

(8) Surface wetting index

Measurement was made under JIS K 6788.

(9) Laminatability

An adhesive was uniformly applied to A3 size cardboard having a small window formed at a predetermined position. Film cut to A3 size was laminated to the cardboard with a manual roller. The adhesive used was TAKELAC A-991/TAKENATE A-19 (mixed at the rate of 15/1) (made by Takeda Chemical Industries, Ltd.). The laminate was held in a 60 ˚C oven for one minute to dry it. Thereafter, the appearance of the film and the bond strength between the paper and film were checked. Those having wrinkles due to shrinkage, those in which the laminate was curled, and those which easily peeled are indicated as $\times$ , and others are indicated as $\bigcirc$.

(10) Finish of the window-pasted portion

After the evaluation in (9), the window-pasted portion was observed. Those having bagginess, corrugations or wrinkles are indicated as $\times$, and others are indicated as $\bigcirc$.

(11) Automatic box-making aptitude

The laminate formed in Test (9) and aged for 48 hours or over at 38 ˚C were blanked as shown in Fig. 1, an adhesive was applied to the margin 4, and the laminate was folded in half and was stuck together as shown in Fig. 4. The adhesive used was the same as used in Test (9). It was aged for 48 hours or over at 38 ˚C. As shown in Fig. 6A, the top and bottom were raised by hand to erect it. Further, as shown in Fig. 6B, by applying a load in a reverse direction to collapse it to 45˚. Thereafter, the way the box stands when no load was applied was evaluated by measuring the angle θ shown in Fig. 6C. When this angle was 20 degrees or less, it was judged passable and indicated as $\bigcirc$. Otherwise, it was indicated as $\times$.

(12) Fall test

In the box made in Test (11), a log weighing 150 grams was put and the box was sealed. It was dropped from the height of 1 meter onto a concrete floor. Deformation of the box due to the shock of the fall, particularly of the portions stuck together, was checked. Those in which complete peeling was seen at the margin were indicated as $\times$, those in which partial peeling was observed were indicated as $\triangle$, and those in which abnormality was scarcely seen was indicated as $\bigcirc$.

[Example 1]

A polylactic acid (melting point: 158 ˚C) having a molecular weight of about 220,000 and the ratio of the L-lactic acid unit and the D-lactic acid unit of 98:2 and one part by weight of particulate silicon dioxide (silica) having an average particle diameter of about 2.5 $\mu$m and made by Fuji Silysia Chemical Ltd. (trade name: Sylysia 430) were separately dried to remove moisture sufficiently. They were put in a 40 mm dia. co-rotating twin-screw extruder set at about 200 ˚C, melt-mixed, extruded into strands, and cut to pellets while cooling. With the pellets as a master batch, they were dried again and 10% mixed into the abovesaid polylactic acid, which was dried, too. The mixture was put in a 40 mm dia. co-rotating twin-screw extruder, extruded into a sheet at the temperature of 210 ˚C, and rapidly cooled in a rotary cooling drum to solidify. A substantially amorphous sheet was obtained.

The sheet obtained was heated by contact with a warm water circulating type roll and by use of an infrared heater, stretched at 75 ˚C to 2.6 times in the machine direction by means of rolls having different peripheral speeds. The machine direction stretched sheet was guided into a tenter while gripping it with a clip, stretched to 2.8 times at 75 ˚C in a transverse direction relative to the film flow, heat-treated at 135 ˚C for about 20 seconds to prepare a film 25 $\mu$m thick.

To the film thus obtained, a polyurethane-family, solvent type adhesive (TAKELAC A-970/TAKENATE A-19=15/1, made by Takeda Chemical Industries Ltd.) was uniformly applied to a thickness of 1 $\mu$m, and was dried in an oven at 60 ˚C for three minutes. 60 $\mu$m-thick high-quality paper punched with a window portion and the abovesaid polylactic acid-family film were laminated together by pressing them with a roller. The laminate was aged for 24 hours at 40 ˚C to obtain a laminated material. From the laminated material obtained, a window-pasted box shown in Fig. 3 was made.

The physical property values and the practicality of the film obtained were measured by the abovesaid method. The physical properties of the film and the practicality as the window-pasted box (packaging box) are shown in Table 1.

[Example 2]

A polylactic acid (melting point: 158 ˚C) having a molecular weight of about 220,000, and the ratio of the L-lactic acid unit and the D-lactic acid unit of 98:2 and one part by weight of particulate silicon dioxide (silica) having an average particle diameter of about 2.5 $\mu$m and made by Fuji Silysia Chemical Ltd. (trade name: Sylysia 430) were separately dried to remove moisture sufficiently. They were put in a 40 mm dia. co-rotating twin-screw extruder set at about 200 ˚C, melt-mixed, extruded into strands, and cut to pellets while cooling. With the pellets as a master batch, they were dried again and 10% mixed into the above polylactic acid, which was dried, too. The mixture was put in a 40 mm dia. co-rotating twin-screw extruder, extruded into a sheet at the temperature of 210 ˚C, rapidly cooled in a rotary cooling drum to solidify. A substantially amorphous sheet was obtained.

The sheet obtained was heated by contact with a warm water circulating type roll and also by use of an infrared heater. After stretching to 2.6 times in the machine direction at 77 ˚C by means of rolls having different peripheral speeds. The machine direction stretched sheet was guided into a tenter while gripping it with a clip and stretched to 2.8 times at 72 ˚C in a transverse direction relative to the film flow. It was subjected to 5% transverse relaxation in the machine and transverse directions at 135 ˚C for about 20 seconds to prepare a film 25 $\mu$m thick.

From this film, a laminated material and a window-pasted box were prepared in a similar manner as in Example 1. The physical properties and utility as a window-pasted box were examined under the same conditions as in Example 1. The results are shown in Table 1.

[Comparative Example 1]

A polylactic acid (melting point: 148 ˚C) having a molecular weight of about 200,000 and the ratio of the L-lactic acid unit and the D-lactic acid unit of 95:5 and one part by weight of particulate silicon dioxide (silica) having an average particle diameter of about 2.5 $\mu$m and made by Fuji Silysia Chemical Ltd. (trade name: Sylysia 430) were dried to remove moisture sufficiently. They were put in a 40 mm dia. co-rotating twin-screw extruder set at about 200 ˚C, melt-mixed, extruded into strands, and cut to pellets while cooling. With the pellets as a master batch, they were dried again and 10% mixed into the above polylactic acid, which was dried, too. The mixture was put in a 40 mm dia. co-rotating twin-screw extruder, extruded into a sheet at a temperature of 210 ˚C, rapidly cooled and solidified in a rotating cooling drum to obtain a substantially amorphous sheet.

The sheet obtained was heating by contact with a warm water circulating type roll and also by use of an infrared heater. After stretching to 2.6 times in the machine direction at 77 ˚C by means of rolls having different peripheral speeds. The machine direction stretched sheet was guided into a tenter while gripping it with a clip, stretched to 2.8 times at 72 ˚C in a transverse direction relative to the film flow, and heat-treated at 115 ˚C for about 15 seconds to prepare a film 25 $\mu$m thick.

Using this film, a laminated material and a window-pasted box were prepared in a similar manner as in Example 1. The physical properties as a film and the utility as a window-pasted box were examined under the same conditions as in Example 1. The results are shown in Table 1.

[Comparative Example 2]

Except that instead of a polylactic acid-family film, a 25 $\mu$m biaxially stretched polypropylene film was used, a laminated material and a window-pasted box were prepared in the same manner as in Example 1.

Film's physical properties and utility as a window-pasted box were examined under the same conditions as in Example 1. The results are shown in Table 1.

[Example 3]

A polylactic acid having a molecular weight of 200,000 and the ratio of the L-lactic acid unit and the D-lactic acid unit of 95:5 and one part by weight of particulate silicon dioxide (silica) having an average particle diameter of about 2.5 $\mu$m and made by Fuji Silysia Chemical Ltd. (trade name: Sylysia 430) were separately dried to remove moisture sufficiently. They were put in a 40 mm dia. co-rotating twin-screw extruder set at about 200 ˚C, melt-mixed, extruded into strands, and cut to pellets while cooling. With the pellets as a master batch, they were dried again and 10% mixed into the abovesaid polylactic acid, which was dried, too. The mixture was put in a 40 mm dia. co-rotating twin-screw extruder, extruded into a sheet at the temperature of 210 ˚C, rapidly cooled and solidified in a rotary cooling drum to obtain a substantially amorphous sheet.

The sheet obtained was heated by contact with a warm water circulating type roll and also by use of an infrared heater, stretched at 75 ˚C to 3.0 times in a machine direction by means of rolls having different peripheral speeds. The machine direction stretched sheet was guided into a tenter while gripping it with a clip, and stretched to 3.0 times at 75 ˚C in a transverse direction relative to the film flow, heat-treated at 120 ˚C for about 15 seconds to prepare a film 15 $\mu$m thick.

The film obtained was, as necessary, surface-treated in the air by means of a corona treating machine so that the wetting index shown in Table 2 would be obtained. Corona treatment on the surfaces was carried out on both sides or only on one side.

The physical properties of the film obtained were measured by the abovesaid method. Also, it was laminated with paper in the abovesaid method, and a box was made. The laminating properties and the box making aptitude were evaluated. The results are shown in Table 2. The heat shrinkage rate was measured according to the abovesaid method except that instead of a 100 ˚C hot water bath, a hot water bath at 80 ˚C was used.

[Example 4]

Except that the conditions described in Table 2 were used, film was prepared in the same manner as in Example 3.

Physical properties, laminating properties, and box making aptitude of the film obtained were measured and evaluated by the abovesaid method. The results are shown in Table 2. The heat shrinkage rate was measured according to the abovesaid method except that instead of a 100 ˚C hot water bath, a hot water bath 80 ˚C was used.

[Example 5]

A polylactic acid having a molecular weight of 220, 000 and the ratio of the L-lactic acid unit and the D-lactic acid unit of 98:2 and one part by weight of particulate silicon dioxide (silica) having an average particle diameter of about 2.5 $\mu$m and made by Fuji Silysia Chemical Ltd. (trade name: Sylysia 430) were separately dried to remove moisture sufficiently. The mixture was put in a 40 mm dia. co-rotating twin-screw extruder set at about 200 ˚C, melt-mixed, extruded into strands, and cut to pellets while cooling. With the pellets as a master batch, they were dried again and 10% mixed into the abovesaid polylactic acid, which was dried, too. The mixture was put in a 40 mm dia. co-rotating twin-screw extruder, extruded into a sheet at the temperature of 210 ˚C, rapidly cooled and solidified in a rotary cooling drum to obtain a substantially amorphous sheet.

The sheet obtained was heated by contact with a warm water circulating type roll and also by use of an infrared heater, stretched to 2.6 times in the machine direction at 77 ˚C by means of rolls having different peripheral speeds. The machine direction stretched sheet was guided into a tenter while gripping it with a clip, stretched to 2.8 times at 72 ˚C in a transverse direction relative to the film flow, and heat-treated at 135 ˚C for about 15 seconds to prepare a film 15 $\mu$m thick.

Physical properties, laminating properties, box making aptitude, etc. of the film obtained were measured and evaluated by the abovesaid method. The results are shown in Table 2. The heat shrinkage rate was measured according to the abovesaid method except that instead of a 100 ˚C hot water bath, a hot water bath at 80 ˚C was used.

[Comparative Example 3]

The films described in Table 2 were prepared in the same manner as in Example 3.

Physical properties, laminating properties, box making aptitude, etc. of the film obtained were measured and evaluated by the abovesaid method. The results are shown in Table 2. The heat shrinkage rate was measured according to the abovesaid method except that instead of a 100 ˚C hot water bath, a hot water bath at 80 ˚C was used.

[Comparative Examples 4-7]

Films were prepared in the same manner as in Example 3 except that the conditions described in Table 2 were used.

In Comparative Example 4, particulate silicon dioxide (silica) (made by Fuji Silysia Chemical Ltd., trade name: Sylysia770) having an average particle diameter of 6.0 $\mu$m was used.

Physical properties, laminating properties, box making aptitude, etc. of the film obtained were measured and evaluated by the abovesaid method. The results are shown in Table 2. The heat shrinkage rate was measured according to the abovesaid method except that instead of a 100 ˚C hot water bath, a hot water bath at 80 ˚C was used.

The present invention provides, as described above, a biodegradable film comprising a polylatic acid-family polymer having a predetermined heat shrinkage rate and a predetermined dead-foldability. Thus the film is superior in heat resistance in use environments, superior in embossing workability, improves designability, and has degradability in natural environments.

Also, since such a biodegradable film has the above properties, it can be used for a laminate film for packaging boxes. Thus, using it, a window-pasted box is provided which is superior in heat resistance in use environments, superior in designability, and has degradability in natural environments.

Further, according to the present invention, a window-pasted box is provided which is good in box making aptitude, free of bagginess, wrinkles or corrugations at the window-pasted portion, good in finish and has degradability in the natural environment.

TABLE 1

|  |  | Example | | Comparative Example | |
|---|---|---|---|---|---|
|  |  | 1 | 2 | 1 | 2 |
| Heat shrinkage rate (%) | (MD) | 2.9 | 1.5 | 10.0 | 1.0 |
|  | (TD) | 2.0 | 1.2 | 8.0 | 0.5 |
| Dead foldability (˚) | | 95.0 | 95.0 | 95.0 | 12.0 |
| Heat resistance in use environment | | △ | ○ | × | ○ |
| Embossing workability | | ○ | ○ | ○ | × |

TABLE 2

|  |  | Example | | | Comparative Example | | | | |
|---|---|---|---|---|---|---|---|---|---|
|  |  | 3 | 4 | 5 | 3 | 4 | 5 | 6 | 7 |
| D% | | 5 | 5 | 2 | 2 | 5 | 5 | 5 | 5 |
| Melting point (˚C) | | 146 | 146 | 166 | 166 | 146 | 146 | 146 | 146 |
| Average diameter of particles(μm) | | 2.5 | 2.5 | 2.5 | 2.5 | 6.0 | 0.9 | 2.5 | 2.5 |
| Heat treatment temperature (˚C) | | 120 | 115 | 135 | 105 | 135 | 120 | 120 | 120 |
| Heat treatment time (sec) | | 15 | 15 | 15 | 20 | 20 | 15 | 15 | 15 |
| Corona treatment | | both side | both side | both side | both side | both side | both side | one side | None |
| Heat shrinkage rate (%) | MD | 3.1 | 4.1 | 1.5 | 19.0 | 0.4 | 3.1 | 3.1 | 3.1 |
|  | TD | 3.2 | 4.8 | 0.6 | 14.0 | 0.3 | 3.2 | 3.2 | 3.2 |
| Haze (%) | | ○ 3 | ○ 2 | ○ 5 | ○ 1 | × 11 | ○ 1 | ○ 3 | ○ 3 |
| Surface roughness | | 0 | 0 | 0 | 0 | 0.1 | 0 | 0 | 0 |
| Wetting index (dyn/cm) | | 51 | 51 | 51 | 51 | 47 | 43 | 51 | 36 |

(continued)

| | Example | | | Comparative Example | | | | |
|---|---|---|---|---|---|---|---|---|
| | 3 | 4 | 5 | 3 | 4 | 5 | 6 | 7 |
| Laminatability | ○ | ○ | ○ | × | ○ | × | ○ | ○ |
| Finish of window-pasted portion | ○ | ○ | ○ | × | × | ○ | ○ | ○ |
| Automatic box-making aptitude | ○ | ○ | ○ | × | ○ | ○ | ○ | ○ |
| Fall test | ○ | ○ | ○ | ○ | ○ | △ | ○ | × |
| Total evaluation | ○ | ○ | ○ | × | × | × | × | × |

**Claims**

1. A method of manufacturing a window-pasted box comprising the steps of
   forming a window (1) of such a size and shape that the content of the box can be seen therethrough in neighboring two, three or four sides in a substrate of a packaging box made of paper;
   laminating a biodegradable stretched film (2) on the exterior surface to cover the window, said stretched film comprising a polylactic acid-family polymer being a polymer of which the major component is L-, D- or DL-lactic acid units, said film having a shrinkage rate at 80°C/10 min of from 0.5 to 5%, a haze of 10% or less, and an average surface roughness Ra of from 0.01 to 0.08, said film having been heat-treated while gripping it; and
   assembling the film-laminated substrate (3).

2. The method of claim 1, wherein at least one of the sides of said stretched film (A) is corona-treated.

3. The method of claim 1 or 2, wherein both sides of said stretched film (A) are corona-treated.

4. The method of any of claims 1 to 3, wherein the surface wetting index of the stretched film (A) is from 40 to 55 dyn/cm.

5. The method of any of claims 1 to 4, wherein said stretched film (A) and paper (B) are laminated at 60 to 80°C.

**Patentansprüche**

1. Verfahren zum Herstellen eines Fensterbehälters, das die folgenden Schritte umfasst:

   Ausbilden eines Fensters (1) mit einer solchen Größe und Form, dass der Inhalt des Behälters an zwei, drei oder vier benachbarten Seiten sichtbar ist, in einem Substrat eines Verpackungsbehälters, das aus Papier besteht;
   Laminieren einer biologisch abbaubaren Streckfolie (2) auf die Außenfläche, um das Fenster abzudecken, wobei die Streckfolie ein Polymer aus der Familie der Polymilchsäuren umfasst und ein Polymer ist, dessen Hauptbestandteil L-, D- oder DL-Milchsäureeinheiten sind, die Folie eine Schrumpfrate von 0,5 bis 5 % bei 80°C/10 min, eine Trübung von 10 % oder weniger sowie eine durchschnittliche Oberflächenrauhigkeit Ra von 0,01 bis 0,08 hat und die Folie wärmebehandelt und dabei festgehalten wurde; und
   Zusammensetzen des mit der Folie laminierten Substrats (3).

2. Verfahren nach Anspruch 1, wobei wenigstens eine der Seiten der Streckfolie (A) Koronabehandlung unterzogen wird.

3. Verfahren nach Anspruch 1 oder 2, wobei beide Seiten der Streckfolie (A) Koronabehandlung unterzogen werden.

**4.** Verfahren nach einem der Ansprüche 1 bis 3, wobei der Oberflächenbenetzungsindex der Streckfolie (A) zwischen 40 und 55 dyn/cm beträgt.

**5.** Verfahren nach einem der Ansprüche 1 bis 4, wobei die Streckfolie (A) und das Papier (B) bei 60 bis 80 ˚C laminiert werden.


**Revendications**

**1.** Procédé pour fabriquer une boîte à fenêtre collée, comprenant les étapes qui consistent
à former une fenêtre (1) d'une taille et d'une forme telles qu'on puisse voir le contenu de la boîte à travers, dans deux, trois ou quatre côtés voisins dans un substrat d'une boîte d'emballage en papier ;
à coller sur la surface extérieure un film étiré biodégradable (2) pour couvrir la fenêtre, ce film étiré comprenant un polymère de la famille des poly(acide lactique), le polymère étant constitué par un polymère dont le composant principal consiste en les unités acide lactique L, D ou DL, le film ayant une vitesse de rétraction à 80˚C/10 min. de 0,5 à 5%, un trouble de 10% ou moins, et une rugosité superficielle moyenne Ra de 0,01 à 0,08, le film ayant subi un traitement thermique alors qu'il était fixé par serrage ; et
à assembler le substrat (3) recouvert du film.

**2.** Procédé de la revendication 1, selon lequel l'une au moins des faces du film étiré (A) subit un traitement corona.

**3.** Procédé de la revendication 1 ou 2, selon lequel les deux faces du film étiré (A) subissent un traitement corona.

**4.** Procédé de l'une quelconque des revendications 1 à 3, selon lequel l'indice de mouillabilité de surface du film étiré (A) est de 40 à 55 dyn/cm.

**5.** Procédé de l'une quelconque des revendications 1 à 4, selon lequel le film étiré (A) et le papier (B) sont collés à 60-80˚C.

【Fig.1】

【Fig.2】

【Fig.3 】

【 Fig.4 】

【Fig. 5】

7

7

θ

【Fig. 6 】

(a)

8

8

(b)

9

45°

9

(c)

θ

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4334448 A
- JP 4336246 A
- JP 8252895 A